Europäisches Patentamt

European Patent Office

Office européen des brevets

(11) Publication number: 0 516 037 A2

# EUROPEAN PATENT APPLICATION

(21) Application number: 92108836.5

(22) Date of filing: 26.05.92

(51) Int. Cl.⁵: G05D 23/19

(30) Priority: 30.05.91 FI 912602

(43) Date of publication of application:
02.12.92 Bulletin 92/49

(84) Designated Contracting States:
AT BE CH DE DK ES FR GB GR IT LI LU MC
NL PT SE

(71) Applicant: NESTE OY
Keilaniemi
SF-02150 Espoo(FI)

(72) Inventor: Takakarhu, Jouni
Nummitie 20 C
SF-00760 Helsinki(FI)
Inventor: Ahvenainen, Antero
Jousitie 2B A2
SF-06150 Porvoo(FI)

(74) Representative: Pellmann, Hans-Bernd,
Dipl.-Ing. et al
Patentanwaltsbüro Tiedtke-Bühling-Kinne &
Partner, Bavariaring 4
W-8000 München 2(DE)

(54) A regulating method for regulating the temperature in a reactor utilized in the polymerization of olefines.

(57) The invention relates to a regulating method for regulating the temperature in a reactor (10) utilized in the polymerization of olefines. In the method, a cooling medium is led to a cooling sleeve (11) of the reactor (10) along an inlet flow line (12) and the heated cooling medium is removed from the cooling sleeve (11) along a return flow line (14). In the method, the temperature of the reactor (10) is measured by means of at least one temperature measuring device (15,16 and 17). A temperature regulating device (18) of the reactor (10) controls a regulating device (21) for the cooling-medium inlet-flow temperature, which device regulates the cooling-medium inlet-flow temperature by controlling valves (25,26 and 27) in branch lines (22,23 and 24) positioned in the inlet flow line (12) such that the desired temperature is achieved in the flow line (12). The first branch line (22) is formed by a branch line provided with a cooling heat exchanger (28) and the second branch line (23) is formed by a branch line provided with a heating heat exchanger (29) and the third branch line (24) is formed by a by-pass flow line.

FIG. 2

The invention relates to a regulating method for regulating the temperature in a reactor utilized in the polymerization of olefines, in which method a cooling medium is led to a cooling sleeve of the reactor along an inlet flow line and the heated cooling medium is removed from the cooling sleeve along a return flow line, and in which method the temperature of the reactor is measured by means of at least one temperature measuring device.

As for the prior art, a reference is made to the publication US 3,229,754, in which is shown a conventional regulating method for regulating the temperature in a reactor utilized in the polymerization of olefines. The greatest disadvantage of this known regulating method is the fact that the temperature regulation is not sufficiently accurate.

The object of the invention is to provide an improvement in the currently known reactor-temperature regulating methods.

The objects of the invention are achieved by means of a regulation method, which is mainly characterized in that a temperature regulating device of a reactor controls a regulating device for the cooling-medium inlet flow temperature, which device regulates the cooling-medium inlet flow temperature by controlling valves in branch lines positioned in the inlet flow line such that the desired temperature is achieved in the flow line.

The invention is described in detail with reference to a certain preferred inventive embodiment shown in the accompanying drawings, to which embodiment the invention is not intended solely to be limited.

Fig. 1 shows as a process flowchart a loop reactor utilized in the polymerization of olefines.

Fig. 2 shows as a block diagram a certain preferred embodiment of an inventive regulating method.

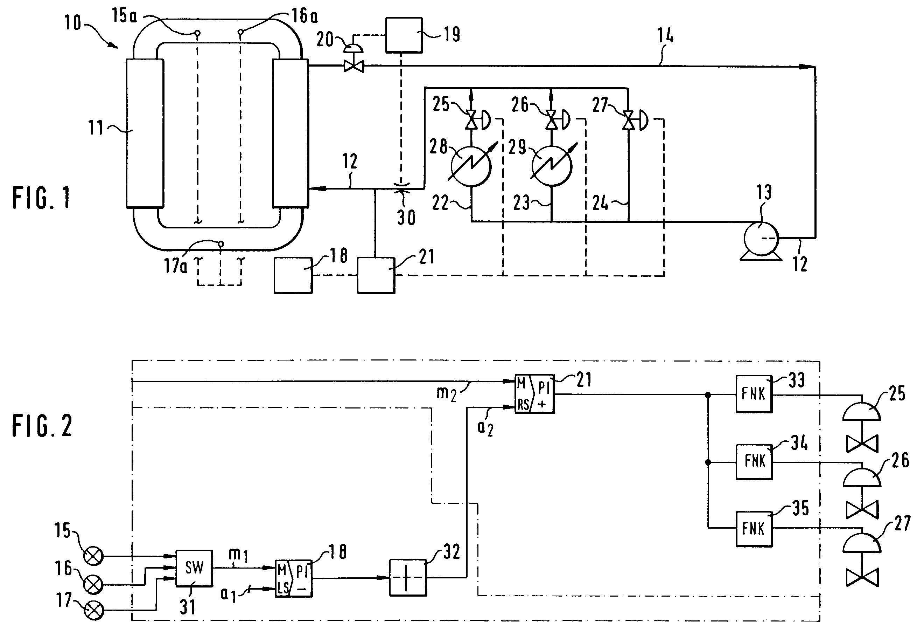

In Fig. 1, a loop reactor utilized in the polymerization of olefines is generally referred to by a reference number 10. A cooling sleeve of the reactor 10 is referred to by a reference number 11. A cooling medium is led to the cooling sleeve 11 of the reactor 10 along an inlet flow line 12 by means of a pump 13. The heated cooling medium is removed from the cooling sleeve 11 along a return flow line 14.

The reactor 10 is cooled by means of the cooling medium for removing the polymerization temperature, and correspondingly, the reactor 10 is heated when no polymerization is performed, whereby no polymerization heat naturally occurs.

The temperature of the reactor 10 is measured by means of one or more temperature measuring devices. In Fig. 1 is shown three temperature measuring points 15a,16a and 17a, which correspond to measuring devices 15,16 and 17 of Fig. 2. The temperature regulating device of the reactor 10 is referred to by a reference number 18. The temperature regulating device 18 of the reactor 10 controls a cooling-medium inlet-flow-temperature regulating device 21. The regulating device 21 regulates the cooling-medium inlet-flow temperature by controlling valves 25,26 and 27 in branch lines 22,23 and 24. A heat exchanger in the branch line 22 is referred to by a reference number 28 and a heat exchanger in the branch line 23 by a reference number 29. The branch line 24 is a so-called by-pass flow line. The valves 25,26 and 27 are controlled such that the desired temperature is reached in the flow line 12 and such that the total flow of the cooling medium is not disturbed to too high an extent.

The flow of the cooling medium is regulated by means of a flow regulator 19. Normally, this flow is maintained constant, and the flow occurs at a high rate. The throttling in the flow line 12 is referred to by a reference number 30 and a valve in the return flow line 14 by a reference number 20.

The temperature of the cooling medium is maintained after the valve 25 nearly constant, since cooling medium flows through the heat exchanger at a considerably high rate. The temperature of the cooling medium is maintained constant after the valve 26 and ca. 5-10°C above the temperature of the reactor 10 by leading a heating medium, such as a steam flow, through the heat exchanger 29. In the most preferred embodiment of the invention, a separate temperature regulating device (not shown) controls a steam flow through the heat exchanger 29. Such a solution makes rapid changes in the cooling-medium inlet-flow temperature in the reactor 10 possible, since the heat exchangers 28 and 29 are already in the desired temperatures.

As appears from the block diagram shown in Fig. 2, the temperature of the reactor 10 is measured by means of any of the three temperature measuring devices 15,16 and 17. The temperature measuring signals are transmitted via a switch 31 as a measuring value $m_1$ to the temperature regulating device 18. The set value of the temperature regulating device 18 of the reactor 10 is referred to by a letter $a_1$. The outlet of the temperature regulating device 18 of the reactor 10 is transmitted via a sum operator 32 as a set value $a_2$ to the cooling-medium inlet-flow temperature regulating device 21. The inlet flow temperature of the cooling medium flowing in the inlet flow line 12 is measured and transmitted as a measuring value $m_2$ to the cooling-medium inlet-flow temperature regulating device 21. The outlet of the cooling-medium inlet-flow temperature regulating device 21 controls via a function means 33 the valve 25, via a function means 34 the valve 26 and via a function means 35 the valve 27.

The inventive regulating method possibilitates the cooling-medium flow rate and especially the cooling-medium flow temperature to be maintained exactly accurately in its set value. As a result, it is possible to reach in the temperature regulation by means of the inventive regulating method an accuracy of ± 0.1...0.2°C, whereas in the conventional regulating methods, such as in the regulating method of the publication US 3,229,754, it is necessary to accept an accuracy, typically in the range of ± 0.5...0.8°C.

The invention relates to a regulating method for regulating the temperature in a reactor (10) utilized in the polymerization of olefines. In the method, a cooling medium is led to a cooling sleeve (11) of the reactor (10) along an inlet flow line (12) and the heated cooling medium is removed from the cooling sleeve (11) along a return flow line (14). In the method, the temperature of the reactor (10) is measured by means of at least one temperature measuring device (15,16 and 17). A temperature regulating device (18) of the reactor (10) controls a regulating device (21) for the cooling-medium inlet-flow temperature, which device regulates the cooling-medium inlet-flow temperature by controlling valves (25,26 and 27) in branch lines (22,23 and 24) positioned in the inlet flow line (12) such that the desired temperature is achieved in the flow line (12). The first branch line (22) is formed by a branch line provided with a cooling heat exchanger (28) and the second branch line (23) is formed by a branch line provided with a heating heat exchanger (29) and the third branch line (24) is formed by a by-pass flow line.

## Claims

1. A regulating method for regulating the temperature in a reactor (10) utilized in the polymerization of olefines, in which method a cooling medium is led to a cooling sleeve (11) of the reactor (10) along an inlet flow line (12) and the heated cooling medium is removed from the cooling sleeve (11) along a return flow line (14), and in which method the temperature of the reactor (10) is measured by means of at least one temperature measuring device (15,16 and 17), **characterized** in that a temperature regulating device (18) of the reactor (10) controls a regulating device (21) for the cooling-medium inlet flow temperature, which device regulates the cooling-medium inlet-flow temperature by controlling valves (25,26 and 27) in branch lines (22,23 and 24) positioned in the inlet flow line (12) such that the desired temperature is achieved in the flow line (12).

2. A regulating method according to Claim 1, **characterized** in that the first branch line (22) is formed by a branch line provided with a cooling heat exchanger (28) and that the second branch line (23) is formed by a branch line provided with a heating heat exchanger (29).

3. A regulating method according to Claim 1 or 2, **characterized** in that the third branch line (24) is formed by a by-pass flow line.

4. A regulating method according to Claim 1,2 or 3, **characterized** in that the flow of the cooling medium in the flow line (12) is regulated by means of a flow regulator (19).

5. A regulating method according to any of the Claims 1-4 , **characterized** in that the temperature of the cooling medium is maintained constant after a valve (26) in the second branch line (23) and 5-10°C above the temperature of the reactor (10).

FIG.1

FIG.2

EP 0 516 037 A2